Europäisches Patentamt

European Patent Office

Office européen des brevets

(11) Publication number: **0 203 237**
A1

## EUROPEAN PATENT APPLICATION

(21) Application number: **85306895.5**

(51) Int. Cl.⁴: **G 06 K 19/06**

(22) Date of filing: **27.09.85**

(30) Priority: **16.05.85 JP 72914/85**

(71) Applicant: **ASTAR INTERNATIONAL CO., LTD.,
10, 14-ban, 2-chome, Sotokanda Chiyoda-ku, Tokyo (JP)**

(72) Inventor: **Hamada, Yoshitaka, 13, 2-ban, 6-chome, Ikuta
Tama-ku, Kawasaki-shi Kanagawa-ken (JP)**

(74) Representative: **Brunner, Michael John et al, GILL
JENNINGS & EVERY 53-64 Chancery Lane, London
WC2A 1HN (GB)**

(43) Date of publication of application: **03.12.86
Bulletin 86/49**

(84) Designated Contracting States: **DE FR GB**

(54) Semiconductor integrated circuit card.

(57) An IC card (A) has a window (7) with an ultraviolet-permeable member (8), superposed over an IC chip (3) so that the memory contents of the chip (3) can be erased by UV light without disassembly of the card.

Astar International Co., Ltd.          Ref: 90/2517/02

SEMICONDUCTOR INTEGRATED CIRCUIT CARD

This invention relates to semiconductor integrated circuit cards (IC cards). These often take the form of a compact, thin, inflexible rigid or semi-rigid card body (usually measuring about 85.6mm long, 54mm wide, and 0.8-2.0mm thick), in to which an IC chip having the desired functions is built, the card being formed of plastic or reinforced cardboard and including circuit terminals arranged on a surface of the card along one edge.

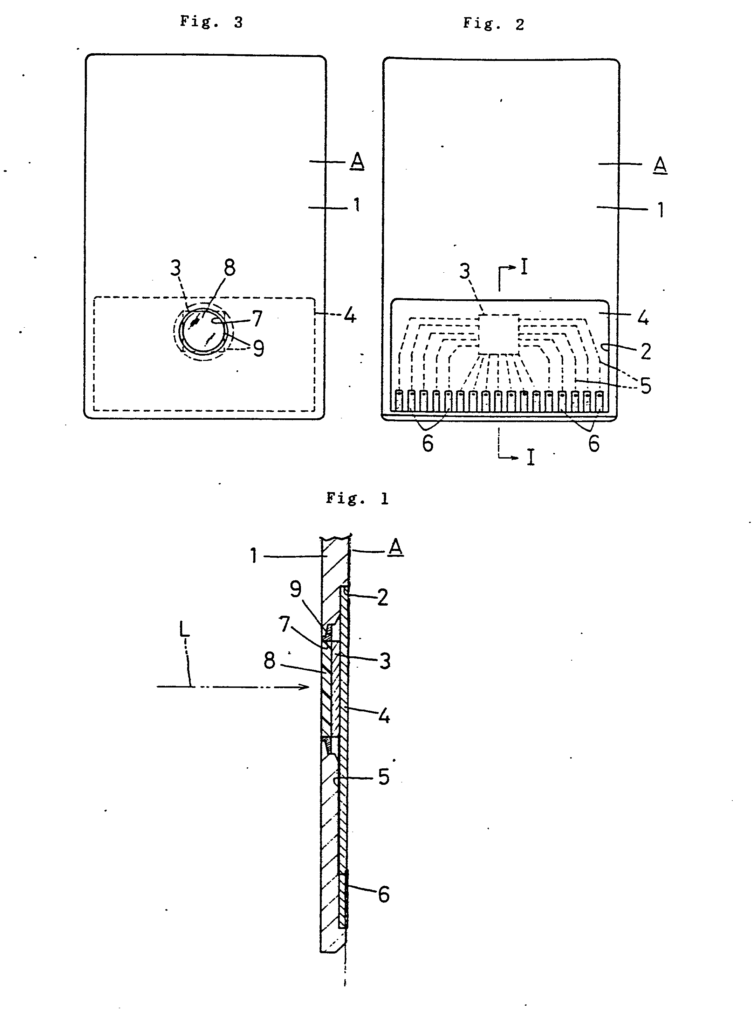

Such a card (A) e.g. as shown in Figure 2, may be inserted into a card slot on a piece of electronic equipment such as a personal computer, hand-held computer, or a TV game machine, the terminals on the card then being electrically connected to corresponding terminals on connectors of the electronic equipment, so that the IC chip on the card is connected to the circuitry in the electronic equipment and thus so that information may be transferred between then.

The information on IC chips can usually be erased by subjecting the IC chip to a beam of ultraviolet rays, after which, new information can be written on to the chip by means of an input head. However, it has not been possible to erase the information stored in a chip incorporated into the thickness of the IC card because of the structure and material from which the card is formed. No IC cards that allow their IC chips to be exposed to ultraviolet light have existed. Although exposure of the built-in IC chip by disassembly of the card allows ultraviolet radiation treatment, the card cannot actually be disassembled easily, and if the card is partially disassembled, the IC card will often be damaged, because the printed circuit board with the IC chip installed is firmly fixed to the card body with adhesive.

Accordingly, an object of the present invention is to enable an IC chip built into an IC card to be subjectable to ultraviolet rays without disassembly in order to erase the information stored in the IC chip.

This can be accomplished according to the invention by installing a window in the card to allow exposure of the IC chip to ultraviolet rays, the window utilizing ultraviolet-permeable material and being located in a position over the built-in chip at the surface of the card.

Thus, an ultraviolet radiation head may be aligned with the exposure window when erasure of the information stored in the IC chip is desired, ultraviolet rays emitted from the head striking the IC chip through the ultraviolet-permeable material of the window. By so doing, the built-in IC chip can be subjected to ultraviolet rays without disassembly of the card, to erase information stored in the IC chip. The ultraviolet-permeable material protects the built-in IC chip from contamination due to dirt, and also from damage due to contact with objects external to the card.

One example of a card according to the invention will now be described with reference to the drawings in which:-

Figure 1 is an enlarged vertical sectional view of the major portion of the card;

Figure 2 is a front face view; and Figure 3 is a rear face view.

The IC card A of the example has a generally rectangular body 1 and a rectangular hollow 2 in the face of the card body 1 positioned near the lower edge and into which a printed circuit board 4, with an IC chip 3, is inserted with the IC chip side oriented into the hollow, and fixed with adhesive.

Thus, the IC chip 3 is built into the thickness of the card body. Printed contact wires 5 connect the chip to metal printed terminals 6 disposed along the lower edge of the card on the surface opposite the IC chip side of the printed circuit board 4 and are connected to the corresponding printed wires 5 through holes. When the IC card A is inserted into a card slot on a piece of electronic equipment (not shown) the terminals 6 come in contact with corresponding terminals on the connectors of the electronic equipment, so that the IC chip on the card A is connected to the circuitry in the electronic equipment.

A window opening 7 for exposure of the IC chip to ultraviolet rays is located at a position corresponding to the built-in IC chip 3 on the back face of the card body 1. The window has an ultraviolet-permeable member 8 made of material such as glass, mica, ultraviolet-permeable resin (e.g. fluorine plastics). In this example the member 8 is assembled to a frame 9 beforehand and the assembly is placed into the window opening 7 from the hollow 2 side and fixed with adhesive before the printed circuit board 4 (with the IC chip 3) is installed.

As stated above radiation of ultraviolet rays L from an erase head (not shown in the figure) to the built-in IC chip 3 through the window 7,8 allows the information stored in the IC chip 3 to be erased. The member 8 in the window 7 protects the built-in IC chip 3 from contamination due to dirt, and also from damage due to contact with objects external to the card.

## CLAIMS

1. An IC card (A) having a built-in IC chip (3), characterized by a window (7) for exposing the IC chip (3) to ultraviolet rays, the window including an ultraviolet-permeable member (8) located in a position over the built-in chip at a surface of the card.

2. An IC card (A) according to claim 1, wherein the ultraviolet permeable member (8) is mounted in a frame (9) in turn mounted in an aperture in the surface of the card.

3. An IC card (A) according to claim 2, wherein the IC clip (3) is mounted on a printed circuit board (4) which is mounted in an aperture (2) in the card, superposed over the window (7).

4. An IC card (A) according to any one of claims 1 to 3, wherein the ultraviolet-permeable member (8) is formed from mica, glass or a fluorine plastics material.

0203237

Fig. 3

Fig. 2

Fig. 1

**European Patent Office**

**EUROPEAN SEARCH REPORT**

Application number

EP 85 30 6895

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,X | PATENTS ABSTRACT OF JAPAN, vol. 9, no. 113, 17th May 1985, page 110 P 356; & JP - A - 60 589 (KIYOUDOU INSATSU K.K.) 05-01-1985 * Whole document * | 1,2 | G 06 K 19/06 |
| Y | idem | 3 | |
| | --- | | |
| A | US-A-3 702 464 (CASTRUCCCI) * Figures 1-3; column 3, line 35 - column 4, line 60 * | 3 | |
| | --- | | |
| Y | FR-A-2 337 381 (HONEYWELL BULL) * Figure 1; page 5, line 24 - page 7, line 6 * | 3 | |
| | ----- | | TECHNICAL FIELDS SEARCHED (Int. Cl.4) |
| | | | G 06 K<br>G 11 C |

The present search report has been drawn up for all claims

| Place of search | Date of completion of the search | Examiner |
|---|---|---|
| THE HAGUE | 25-08-1986 | GYSEN L.A.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82